(19) Europäisches Patentamt
European Patent Office
Office européen des brevets

(11) **EP 4 761 091 A1**

(12) **EUROPEAN PATENT APPLICATION**
published in accordance with Art. 153(4) EPC

(43) Date of publication:
**17.06.2026 Bulletin 2026/25**

(51) International Patent Classification (IPC):
**H02M 7/48** (2007.01)　　**H02P 27/08** (2006.01)

(21) Application number: **24871767.0**

(52) Cooperative Patent Classification (CPC):
**H02M 7/48; H02P 27/08**

(22) Date of filing: **04.09.2024**

(86) International application number:
**PCT/JP2024/031721**

(87) International publication number:
**WO 2025/069968 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023　JP 2023170281**

(71) Applicant: **Daikin Industries, Ltd.
Osaka-shi, Osaka 530-0001 (JP)**

(72) Inventors:
• **TANAKA, Nami**
**Osaka-shi, Osaka 530-0001 (JP)**
• **MIYAJIMA, Takayuki**
**Osaka-shi, Osaka 530-0001 (JP)**
• **HAYASHI, Nobuo**
**Osaka-shi, Osaka 530-0001 (JP)**

(74) Representative: **Hoffmann Eitle
Patent- und Rechtsanwälte PartmbB
Arabellastraße 30
81925 München (DE)**

(54) **ELECTRIC POWER CONVERSION APPARATUS**

(57) An electric power conversion apparatus (10) is provided with an inverter circuit (13) connected in parallel to a capacitor (C), including switching elements (Su, Sv, Sw, Sx, Sy, Sz), and configured to suppress LC resonance of a circuit including the capacitor (C) and a reactor (L). A control unit (40) is caused to control the inverter circuit (13) so that an integral value of a current flowing from the capacitor (C) to the inverter circuit (13) is 0 or less in a period of a half cycle of the LC resonance starting from a transition timing for a transition from a non-conduction period during which a current does not flow from an AC power source (20) to a converter circuit (11) to a conduction period during which the current flows from the AC power source (20) to the converter circuit (11).

FIG.1

EP 4 761 091 A1

**Description**

Technical Field

The present disclosure relates to an electric power conversion apparatus that converts electric power output from an alternating current (AC) power source and supplies the converted electric power to a load.

Background Art

An electric power conversion apparatus disclosed in PTL 1 includes a rectifier circuit that rectifies an alternating current output from an AC power source, an inverter circuit that includes a plurality of switching elements and converts a direct current output by the rectifier circuit into an alternating current by a switching operation of the switching elements and supplies the alternating current to a load, a direct-current (DC) link capacitor connected between input nodes of the inverter circuit and having a capacitance value set so as to allow a fluctuation in an output voltage of the rectifier circuit and suppress a ripple voltage caused by the switching operation, a reactor connected between the AC power source and the rectifier circuit, and a control unit that controls the inverter circuit. In this electric power conversion apparatus, the control unit controls the inverter circuit so as to have a non-conduction period during which a current does not flow from the AC power source to the rectifier circuit, thereby reducing the effective value of the motor current.

Citation List

Patent Literature

PTL 1: Japanese Patent No. 6566105

Summary of Invention

Technical Problem

However, in PTL 1, immediately after a transition from the non-conduction period to a conduction period during which the current flows from the AC power source to the rectifier circuit, a harmonic component is superimposed on a power-source current flowing from the AC power source to the rectifier circuit due to LC resonance of a circuit including the DC link capacitor and the reactor.
The present disclosure is made in view of the above-described problem, and an object thereof is to suppress a harmonic generated in a power-source current due to LC resonance of a circuit including a DC link capacitor and a reactor.

Solution to Problem

A first aspect of the present disclosure provides an electric power conversion apparatus including a rectifier circuit (11) configured to rectify an alternating current output from a single-phase AC power source (20), a first inverter circuit (13) including a plurality of switching elements (Su, Sv, Sw, Sx, Sy, Sz) and configured to convert a direct current output by the rectifier circuit (11) into an alternating current by a switching operation of the switching elements (Su, Sv, Sw, Sx, Sy, Sz) and supply the alternating current to a first load (30), a DC link capacitor (C) connected between input nodes of the first inverter circuit (13) and having a capacitance value set so as to allow a fluctuation in an output voltage of the rectifier circuit (11) and suppress a ripple voltage caused by the switching operation, a reactor (L) connected between the rectifier circuit (11) and the first inverter circuit (13) or between the AC power source (20) and the rectifier circuit (11), and a control unit (40) configured to control the first inverter circuit (13) so as to have a non-conduction period during which a current does not flow from the AC power source (20) to the rectifier circuit (11). The electric power conversion apparatus includes a resonance suppression unit (13, 14) connected in parallel to the DC link capacitor (C), including at least one switching element (Su, Sv, Sw, Sx, Sy, Sz, 141), and configured to suppress LC resonance of a circuit including the DC link capacitor (C) and the reactor (L). The control unit (40) is configured to control the resonance suppression unit (13, 14) so that an integral value of a current flowing from the DC link capacitor (C) to the resonance suppression unit (13, 14) is 0 or less in a period (T1) of a half cycle of the LC resonance starting from a transition timing (t1) for a transition from the non-conduction period to a conduction period during which the current flows from the AC power source (20) to the rectifier circuit (11).
With the first aspect, the control is provided so that the integral value of the current flowing from the DC link capacitor (C) to the resonance suppression unit (13, 14) is 0 or less in the period of the half cycle of the LC resonance starting from the transition timing (t1). Thus, a harmonic of a power-source current ($i_{in}$) can be suppressed as compared with the case where the integral value exceeds 0.

According to a second aspect of the present disclosure, based on the first aspect, the control unit (40) is configured to control the resonance suppression unit (13, 14) so that the current flowing from the DC link capacitor (C) to the resonance suppression unit (13, 14) is 0 or less at the transition timing (t1).

With the second aspect, the current flowing from the DC link capacitor (C) to the resonance suppression unit (13, 14) is 0 or less at the transition timing (t1). Thus, the harmonic of the power-source current ($i_{in}$) can be suppressed as compared with the case where the current exceeds 0.

According to a third aspect of the present disclosure, based on the first or second aspect, the resonance suppression unit (13, 14) is the first inverter circuit (13), and the first load (30) is a motor (30).

According to a fourth aspect of the present disclosure, based on the third aspect, the motor (30) is a motor (30) of a compressor.

According to a fifth aspect of the present disclosure, based on the first or second aspect, the electric power conversion apparatus includes a resonance suppression circuit (14) including a capacitive element (143) and a resonance-suppression-circuit switching element (141) connected in series to each other, the resonance suppression circuit (14) being connected in parallel to the DC link capacitor (C). The resonance suppression unit (13, 14) is the resonance suppression circuit (14). The control unit (40) is configured to set the transition timing (t1) to a timing at which a voltage of the capacitive element (143) is higher than a voltage of the DC link capacitor (C).

With the fifth aspect, when the resonance-suppression-circuit switching element (141) is turned on, a current can flow from the capacitive element (143) to the DC link capacitor (C).

According to a sixth aspect of the present disclosure, based on the fifth aspect, the resonance suppression circuit (14) further includes a diode (144) connected in parallel to the resonance-suppression-circuit switching element (141) such that a cathode of the diode (144) is directed toward the capacitive element (143).

With the sixth aspect, the diode (144) can restrict a decrease in the voltage of the capacitive element (143) due to the current flowing out from the capacitive element (143) in a state in which the resonance-suppression-circuit switching element (141) is turned off. In addition, when the capacitive element (143) is charged via the diode (144) in the state in which the resonance-suppression-circuit switching element (141) is turned off, the voltage of the capacitive element (143) can be made higher than the voltage of the DC link capacitor (C).

According to a seventh aspect of the present disclosure, based on the fifth or sixth aspect, a second inverter circuit (145) configured to convert the voltage of the capacitive element (143) into an alternating current and supply the alternating current to a second load (60) different from the first load (30) is connected to the capacitive element (143).

With the seventh aspect, the energy stored in the capacitive element (143) can be supplied to the second load (60).

According to an eighth aspect of the present disclosure, based on any one of the first to fourth aspects, the control unit (40) is configured to control the resonance suppression unit (13, 14) based on a detected value of a voltage ($v_{dc}$) of the DC link capacitor (C).

A ninth aspect of the present disclosure provides an electric power conversion apparatus including a rectifier circuit (11) configured to rectify an alternating current output from a single-phase AC power source, an inverter circuit (13) including a plurality of switching elements (Su, Sv, Sw, Sx, Sy, Sz) and configured to convert a direct current output by the rectifier circuit (11) into an alternating current by a switching operation of the switching elements (Su, Sv, Sw, Sx, Sy, Sz) and supply the alternating current to a load (30), a DC link capacitor (C) connected between input nodes of the inverter circuit (13) and having a capacitance value set so as to allow a fluctuation in an output voltage of the rectifier circuit (11) and suppress a ripple voltage caused by the switching operation, a reactor (L) connected between the rectifier circuit (11) and the inverter circuit (13) or between the AC power source (20) and the rectifier circuit (11), and a control unit (40) configured to control the inverter circuit (13) so as to have a non-conduction period during which a current does not flow from the AC power source (20) to the rectifier circuit (11). The electric power conversion apparatus includes a resonance suppression unit (13, 14) connected in parallel to the DC link capacitor (C), including at least one switching element (Su, Sv, Sw, Sx, Sy, Sz, 141, 145a), and configured to suppress LC resonance of a circuit including the DC link capacitor (C) and the reactor (L). The control unit (40) is configured to operate the resonance suppression unit (13, 14) to attenuate a physical quantity correlated with a pulsation of magnetic energy of the reactor (L) due to the LC resonance by more than 80% in a resonance suppression period of three cycles of the LC resonance starting from a transition timing (t1) for a transition from the non-conduction period to a conduction period during which the current flows from the AC power source (20) to the rectifier circuit (11).

With the ninth aspect, the physical quantity correlated with the pulsation of the magnetic energy of the reactor (L) due to the LC resonance is attenuated by more than 80% in the period of the three cycles of the LC resonance starting from the transition timing (t1). Thus, the harmonic of the power-source current ($i_{in}$) can be suppressed.

A tenth aspect of the present disclosure provides an electric power conversion apparatus including a rectifier circuit (11) configured to rectify an alternating current output from an AC power source (20) of three phases, an inverter circuit (13) including a plurality of switching elements (Su, Sv, Sw, Sx, Sy, Sz) and configured to convert a direct current output by the rectifier circuit (11) into an alternating current by a switching operation of the switching elements (Su, Sv, Sw, Sx, Sy, Sz) and supply the alternating current to a load, a DC link capacitor (C) connected between input nodes of the inverter circuit (13) and having a capacitance value set so as to allow a fluctuation in an output voltage of the rectifier circuit (11) and suppress a ripple voltage caused by the switching operation, a reactor (L) connected between the rectifier circuit (11) and the inverter circuit (13) or between the AC power source (20) and the rectifier circuit (11), and a control unit (40) configured to control the inverter circuit (13) so as to have a non-conduction period during which a current of a predetermined phase among the three phases does not flow from the AC power source (20) to the rectifier circuit (11). The electric power conversion apparatus includes a resonance suppression unit (13, 14) connected in parallel to the DC link capacitor (C), including at least one switching element (Su, Sv, Sw, Sx, Sy, Sz, 141, 145a), and configured to suppress LC resonance of a circuit including the DC link capacitor (C) and the reactor (L). The control unit (40) is configured to operate the resonance suppression unit (13, 14) to attenuate a physical quantity correlated with a pulsation of magnetic energy of the reactor (L) due to the LC resonance by more than 80% in a resonance suppression period of three cycles of the LC resonance starting from a transition timing (t1) for a transition from the non-conduction period to a conduction period during which the current of the predetermined phase flows from the AC power source (20) to the rectifier circuit (11).

With the tenth aspect, the physical quantity correlated with the pulsation of the magnetic energy of the reactor (L) due to the LC resonance is attenuated by more than 80% in the period of the three cycles of the LC resonance starting from the transition timing (t1). Thus, the harmonic of the power-source current ($i_{in}$) can be suppressed.

According to an eleventh aspect of the present disclosure, based on the ninth or tenth aspect, the physical quantity is an amplitude of a current flowing through the reactor (L) during the resonance suppression period.

With the eleventh aspect, the amplitude of the current due to the LC resonance among the current flowing through the reactor (L) is attenuated by more than 80% in the period of the three cycles of the LC resonance starting from the transition timing (t1). Thus, the harmonic of the power-source current ($i_{in}$) can be suppressed.

A twelfth aspect of the present disclosure provides an electric power conversion apparatus including a rectifier circuit (11) configured to rectify an alternating current output from an AC power source (20) of three phases, an inverter circuit (13) including a plurality of switching elements (Su, Sv, Sw, Sx, Sy, Sz) and configured to convert a direct current output by the rectifier circuit (11) into an alternating current by a switching operation of the switching elements (Su, Sv, Sw, Sx, Sy, Sz) and supply the alternating current to a load (30), a DC link capacitor (C) connected between input nodes of the inverter circuit (13) and having a capacitance value set so as to allow a fluctuation in an output voltage of the rectifier circuit (11) and suppress a ripple voltage caused by the switching operation, a reactor (L) connected between the rectifier circuit (11) and the inverter circuit (13) or between the AC power source (20) and the rectifier circuit (11), and a control unit (40) configured to control the inverter circuit (13) so as to have a non-conduction period during which a current of a predetermined phase among the three phases does not flow from the AC power source (20) to the rectifier circuit (11). The electric power conversion apparatus includes a resonance suppression unit (13, 14) connected in parallel to the DC link capacitor (C), including at least one switching element (Su, Sv, Sw, Sx, Sy, Sz, 141), and configured to suppress LC resonance of a circuit including the DC link capacitor (C) and the reactor (L). The control unit (40) is configured to control the resonance suppression unit (13, 14) so that an integral value of a current flowing from the DC link capacitor (C) to the resonance suppression unit (13, 14) is 0 or less in a period of a half cycle of the LC resonance starting from a transition timing (t1) for a transition from the non-conduction period to a conduction period during which the current of the predetermined phase flows from the AC power source (20) to the rectifier circuit (11).

With the twelfth aspect, the control is provided so that the integral value of the current flowing from the DC link capacitor (C) to the resonance suppression unit (13, 14) is 0 or less in the period of the half cycle of the LC resonance starting from the transition timing (t1). Thus, the harmonic of the power-source current ($i_{in}$) can be suppressed as compared with the case where the integral value exceeds 0.

Brief Description of Drawings

[Fig. 1] Fig. 1 is a block diagram illustrating a configuration of an electric power conversion apparatus according to Embodiment 1.
[Fig. 2] Fig. 2 illustrates an example of a waveform of a power-source current.
[Fig. 3] Fig. 3 illustrates an example of a waveform of a power-source voltage and a DC voltage.
[Fig. 4] Fig. 4 illustrates waveforms of a power-source voltage and DC voltages under Condition 1 to Condition 3.
[Fig. 5] Fig. 5 illustrates waveforms of power-source currents under Condition 1 to Condition 3.
[Fig. 6] Fig. 6 illustrates an example of waveforms of a power-source voltage, a DC voltage, and an inverter current before and after a transition timing according to Embodiment 1.
[Fig. 7] Fig. 7 is a diagram corresponding to Fig. 6 when the inverter current at the transition timing is a positive value.
[Fig. 8] Fig. 8 illustrates a waveform of a current flowing through a reactor due to LC resonance when an attenuation coefficient is 1000.

[Fig. 9] Fig. 9 is an enlarged diagram of part X in Fig. 8.

[Fig. 10] Fig. 10 is a graph illustrating the relationship between the attenuation ratio and the ratio of a harmonic to a harmonic when the attenuation ratio is 0.

[Fig. 11] Fig. 11 is a diagram corresponding to Fig. 1 of Embodiment 2.

[Fig. 12] Fig. 12 is a block diagram illustrating a configuration of a repetitive control unit.

[Fig. 13] Fig. 13 is a diagram corresponding to Fig. 1 of Embodiment 3.

[Fig. 14] Fig. 14 illustrates waveforms of a DC voltage, a DC voltage command value, a power-source voltage, a compensation amount generated by feedback control on the DC voltage, and a compensation amount generated by repetitive control on the DC voltage according to Embodiment 3.

[Fig. 15] Fig. 15 illustrates a power-source current, a power-source current command value, an inverter current, and a q-axis current according to Embodiment 3.

[Fig. 16] Fig. 16 is a diagram corresponding to Fig. 1 of Embodiment 4.

[Fig. 17] Fig. 17 illustrates waveforms of a DC-link voltage, a power-source voltage, and a voltage of a resonance suppression circuit according to Embodiment 4.

[Fig. 18] Fig. 18 is a diagram corresponding to Fig. 1 of Embodiment 5.

Description of Embodiments

Hereinafter, embodiments of the present disclosure will be described with reference to the drawings. Note that the following embodiments are substantially preferable examples, and are not intended to limit the scope of the present disclosure, applications thereof, or uses thereof.

(Embodiment 1)

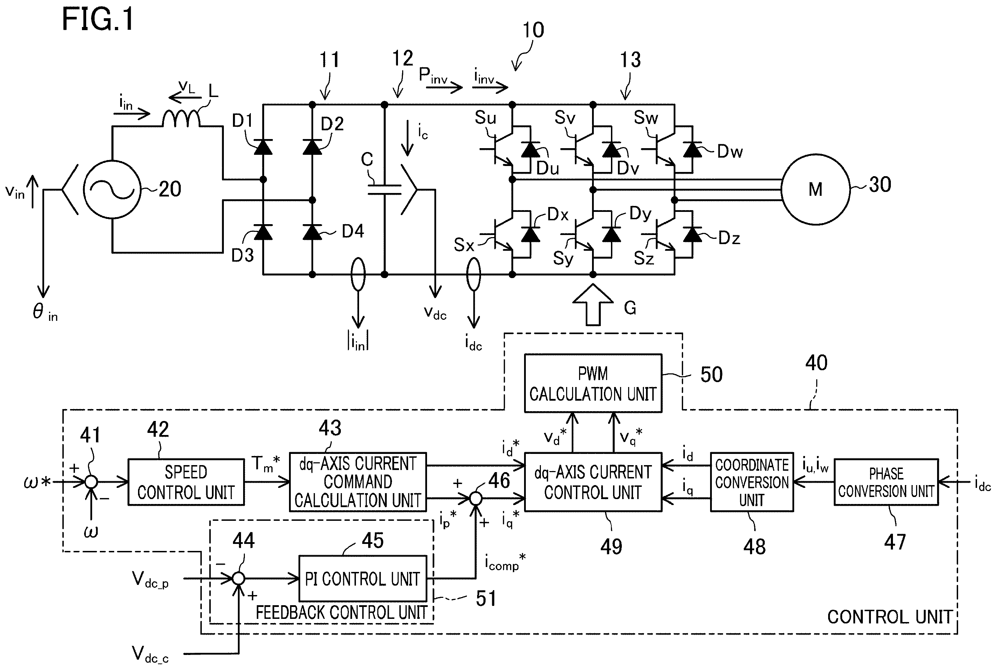

Fig. 1 illustrates a configuration of an electric power conversion apparatus (10) according to Embodiment 1 of the present disclosure. The electric power conversion apparatus (10) converts an input AC voltage (in this example, a power-source voltage ($v_{in}$) supplied from a single-phase AC power source (20)) into a predetermined output AC voltage, and supplies the output AC voltage to a motor (30) as a first load. In the present embodiment, as illustrated in Fig. 1, the electric power conversion apparatus (10) includes a reactor (L), a converter circuit (11), a DC link unit (12), an inverter circuit (13), and a control unit (40). Note that the motor (30) is constituted by, for example, an interior permanent magnet motor (IPM motor), and drives a compressor of an air conditioner (not illustrated) in the present embodiment.

<Reactor>

The reactor (L) is connected between the AC power source (20) and one of input nodes of the converter circuit (11).

<Converter Circuit>

The converter circuit (11) is a rectifier circuit that is connected to the AC power source (20) via the reactor (L) and full-wave rectifies an alternating current output from the AC power source (20). In this example, the converter circuit (11) includes four diodes (D1, D2, D3, D4) connected in a bridge form. In other words, the converter circuit (11) is constituted by a diode bridge circuit.

<DC Link Unit>

The DC link unit (12) includes a capacitor (C) as a DC link capacitor connected between a pair of input nodes of the inverter circuit (13). The DC link unit (12) receives an output of the converter circuit (11) (in other words, a full-wave rectified power-source voltage ($v_{in}$)) as an input and generates a DC (direct-current) voltage ($v_{dc}$). The DC voltage ($v_{dc}$) pulsates in accordance with the frequency of the power-source voltage ($v_{in}$). The DC voltage ($v_{dc}$) is a voltage of the capacitor (C).

Here, the reason why the DC voltage ($v_{dc}$) includes the pulsating component corresponding to the frequency of the power-source voltage ($v_{in}$) will be described. The capacitance value of the capacitor (C) of the DC link unit (12) is set so as to allow a fluctuation in the output of the converter circuit (11) and suppress a ripple voltage (a voltage fluctuation corresponding to a switching frequency) caused by a switching operation (described later) of the inverter circuit (13). Specifically, the capacitor (C) is constituted by a small-capacitance capacitor (for example, a film capacitor) having a capacitance value (for example, about several tens of microfarads ($\mu F$)) that is about 0.01 times the capacitance value of a smoothing capacitor (for example, an electrolytic capacitor) used for smoothing the output of a converter circuit in a general electric power conversion apparatus. Since the capacitor (C) is constituted as described above, the output of the converter circuit (11) is hardly smoothed in the DC link unit (12), and as a result, a pulsating component corresponding to the frequency of the power-source voltage ($v_{in}$) (in this example, a pulsating component having a frequency twice the frequency of the power-source voltage ($v_{in}$)) remains in the DC voltage ($v_{dc}$). For example, the DC voltage ($v_{dc}$) is pulsating so that its maximum value is more than twice its minimum value.

<Inverter Circuit>

The inverter circuit (13) includes six bridge-connected switching elements (Su, Sv, Sw, Sx, Sy, Sz), and six freewheeling diodes (Du, Dv, Dw, Dx, Dy, Dz) in order to supply a three-phase output AC voltage to the motor (30). Specifically, the inverter circuit (13) includes three switching legs each including two switching elements connected in series to each other. In each of the three switching legs, a midpoint between the switching element (Su, Sv, Sw) of the upper arm and the switching element (Sx, Sy, Sz) of the lower arm is connected to a coil of a corresponding one of phases (u-phase coil, v-phase coil, w-phase coil) of the motor (30). The six freewheeling diodes (Du, Dv, Dw, Dx, Dy, Dz) are also connected in anti-parallel to the six switching elements (Su, Sv, Sw, Sx, Sy, Sz), respectively. The pair of input nodes of the inverter circuit (13) are connected to both ends of the capacitor (C) of the DC link unit (12). The inverter circuit (13) converts a direct current output from the converter circuit (11) into an alternating current by a switching operation of the switching elements (Su, Sv, Sw, Sx, Sy, Sz) and supplies the alternating current to the motor (30).

<Control Unit>

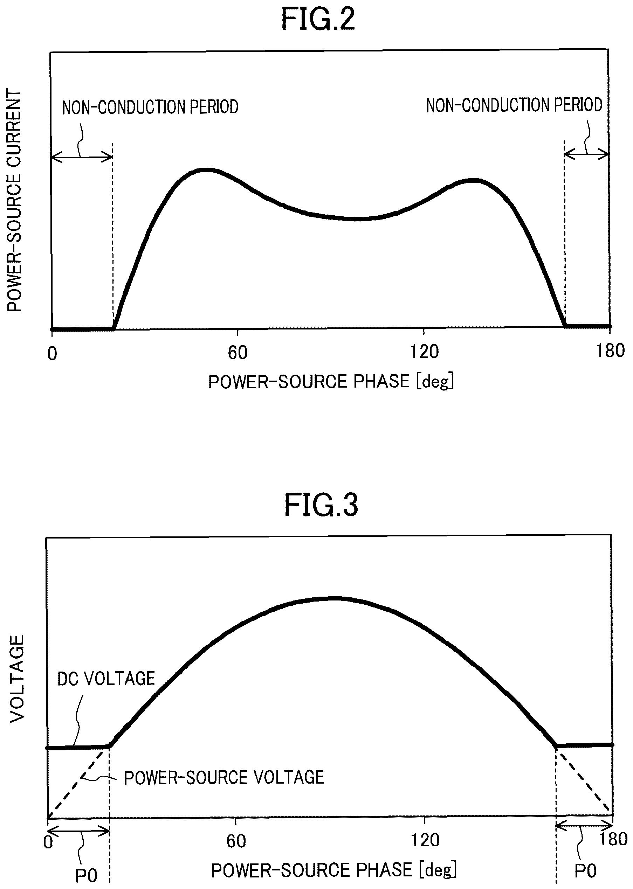

The control unit (40) is constituted by using a microcomputer and a memory device that stores software for controlling the microcomputer. The control unit (40) controls the switching operation of the inverter circuit (13) to control the output (output AC voltage) of the inverter circuit (13) so that the number of rotations ($\omega$) of the motor (30) meets a given command value (hereinafter, referred to as a number-of-rotation command value ($\omega^*$)). Thus, the driving of the motor (30) is controlled.
In order to provide the control, as illustrated in Fig. 1, the control unit (40) includes a first subtraction unit (41), a speed control unit (42), a dq-axis current command calculation unit (43), a second subtraction unit (44), a PI control unit (45), an addition unit (46), a phase conversion unit (47), a coordinate conversion unit (48), a dq-axis current control unit (49), and a PWM calculation unit (50).
The first subtraction unit (41) calculates a deviation between the number of rotations ($\omega$) of the motor (30) and the number-of-rotation command value ($\omega^*$).
Based on the deviation calculated by the first subtraction unit (41), the speed control unit (42) performs, for example, a PID (proportional, integral, differential) operation to generate a command value of an average motor torque (Tm) (hereinafter, referred to as an average torque command value (Tm*)). The average torque command value (Tm*) is output to the dq-axis current command calculation unit (43).
The dq-axis current command calculation unit (43) generates a command value (hereinafter, referred to as a power-source current command value ($|i_{in}^*|$)) that pulsates in accordance with the frequency (for example, 50 Hz) of the power-source voltage ($v_{in}$) based on a phase angle of the power-source voltage ($v_{in}$) (hereinafter, referred to as a power-source phase ($\theta in$)). The power-source current command value ($|I_{in}^*|$) is generated so that, when a waveform obtained by extracting and combining a fundamental wave, a third harmonic, and a fifth harmonic based on the fundamental frequency of the voltage of the AC power source (20) is multiplied by the polarity of the voltage of the AC power source (20), the waveform has two or more local maximum points in a power-source half cycle. The power-source current command value ($|I_{in}^*|$) is also generated so as to have a non-conduction period during which a current does not flow from the AC power source (20) to the converter circuit (11). Fig. 2 illustrates an example of the waveform of the power-source current command value ($|I_{in}^*|$). The waveform of Fig. 2 is obtained by plotting the power-source current command value ($|I_{in}^*|$) in the power-source half cycle. As illustrated in Fig. 2, one local maximum point described above appears in each of the first half and the second half of the power-source current command value ($|I_{in}^*|$). In addition, a period during which the value of the power-source current command value ($|I_{in}^*|$) is zero is provided at each of both ends of the waveform of the power-source current command value ($|I_{in}^*|$). As described above, since the non-conduction period is present in the power-source current ($i_{in}$), the d-axis current can be reduced, and the effective value of the motor current can be minimized. That is, it is possible to select whether the peak of the motor current is minimized or the effective value of the motor current is minimized depending on the magnitude of the non-conduction period.
In order to generate the power-source current command value ($|I_{in}^*|$) as described above, the dq-axis current command calculation unit (43) of the present embodiment is configured to read the value of the power-source current command value ($|I_{in}^*|$) calculated in advance off-line for various power-source phases ($\theta_{in}$) (more specifically, calculated at the time of design) and stored in the memory device in the form of a table or a function (hereinafter, referred to as a table or the like) using the power-source phase ($\theta_{in}$) as an argument.

The dq-axis current command calculation unit (43) generates a pulsation command value ($i_p{}^*$) serving as a basis of a command value of a q-axis current ($i_q$) (hereinafter, referred to as a q-axis current command value ($i_q{}^*$)). In order to generate the pulsation command value ($i_p{}^*$), Expressions (1) to (8) below are used.

[Math. 1]

$$v_{dc}(t) = \left| v_{in}(t) \right| - L\frac{d\left| i_{in}(t) \right|}{dt} \quad \cdots (1)$$

[Math. 2]

$$i_c(t) = C \cdot \frac{dv_{dc}(t)}{dt} \quad \cdots (2)$$

[Math. 3]

$$i_{inv}(t) = i_{in}(t) - i_c(t) \quad \cdots (3)$$

[Math. 4]

$$p_{inv}(t) = v_{dc}(t) i_{inv}(t) \quad \cdots (4)$$

[Math. 5]

$$p_{inv}(t) = \left( \left| v_{in}(t) \right| - L\frac{d\left| i_{in}(t) \right|}{dt} \right)\left( i_{in}(t) - C\frac{d}{dt}\left( \left| v_{in}(t) \right| - L\frac{d\left| i_{in}(t) \right|}{dt} \right) \right) \quad \cdots (5)$$

[Math. 6]

$$P_{inv}(t) \approx \omega T_m(t) \quad \cdots (6)$$

[Math. 7]

$$T_m(t) = p_n i_q(t)\left( \Phi + (L_d - L_q)i_d(t) \right) \quad \cdots (7)$$

[Math. 8]

$$P_{inv}(t) \propto i_q(t) \quad \cdots (8)$$

In these expressions, $v_{in}$ denotes a power-source voltage, $i_{in}$ denotes a power-source current, and $v_{dc}$ denotes a voltage in the capacitor (C). In addition, $P_{inv}$ denotes an output electric power of the inverter circuit (13), L denotes an inductance in the reactor (L), and C denotes an electrostatic capacity of the capacitor (C). In addition, $i_d$ denotes a d-axis current, $i_q$ denotes a q-axis current, $T_m$ denotes an average motor torque, and $p_n$ denotes the number of motor pole pairs. In these expressions, "(t)" added after each variable indicates that the value of the variable is a value at a time t. For simplicity, in this example, each expression assumes that there is no loss in the converter circuit (11) and the inverter circuit (13).

For example, Expressions (1) to (4) are expressions derived from the relationship between the current and the voltage in each portion of the circuit (see Fig. 1) constituting the electric power conversion apparatus (10). As can be seen from Expressions (1) to (5), the inverter electric power ($P_{inv}$) can be derived from the target value of the absolute value of the power-source current ($i_{in}$) (in other words, the power-source current command value ($|i_{in}{}^*|$)). In addition, since the inverter electric power ($P_{inv}$) and the motor output (see the right side of Expression (6)) are substantially equal to each other, Expression (6) is established. In addition, the average motor torque ($T_m$) is expressed by Expression (7). As can be seen from Expression (7), under the condition that the d-axis current ($i_d$) is constant, the average motor torque ($T_m$) is proportional to the q-axis current ($i_q$).

Thus, as presented in Expression (8), the q-axis current ($i_q$) is substantially proportional to the inverter electric power ($P_{inv}$). From the above, for example, the inverter electric power ($P_{inv}$) is normalized so that the average value is 1 and the result is multiplied by the average torque command value ($T_m{}^*$) to calculate a command value (in other words, the

pulsation command value ($i_p$*)) serving as a basis of the q-axis current ($i_q$).

The second subtraction unit (44) subtracts a predicted value ($V_{dc\_p}$) of the DC voltage ($v_{dc}$) from a command value ($V_{dc\_c}$) of the DC voltage ($v_{dc}$) to calculate a deviation between the command value ($V_{dc\_c}$) and the predicted value ($V_{dc\_p}$) of the DC voltage ($v_{dc}$). The control unit (40) calculates the predicted value ($V_{dc\_p}$) of the DC voltage ($v_{dc}$) with reference to the detected value of the DC voltage ($v_{dc}$). That is, the predicted value ($V_{dc\_p}$) of the DC voltage ($v_{dc}$) is a value based on the detected value of the DC voltage ($v_{dc}$) to be referred to. The predicted value ($V_{dc\_p}$) of the DC voltage ($v_{dc}$) is also a value one control cycle ahead of the timing at which the DC voltage ($v_{dc}$) to be referred to is detected.

The PI control unit (45) calculates and outputs a compensation amount (q-axis current command compensation amount ($i_{comp}$*)) so as to reduce the deviation calculated by the second subtraction unit (44). In this example, the PI control unit (45) performs, for example, a PI (proportional, integral) operation based on the deviation between the command value ($V_{dc\_c}$) and the predicted value ($V_{dc\_p}$) of the DC voltage ($v_{dc}$) to obtain the q-axis current command compensation amount ($i_{comp}$*). The second subtraction unit (44) and the PI control unit (45) constitute a feedback control unit (51).

The addition unit (46) adds the q-axis current command compensation amount ($i_{comp}$*) to the pulsation command value ($i_p$*), and outputs the addition result as the q-axis current command value ($i_q$*) to the dq-axis current control unit (49).

The phase conversion unit (47) converts a DC-link current ($i_{dc}$) into a u-phase current ($i_u$) and a w-phase current ($i_w$), and outputs the u-phase current and the w-phase current.

The coordinate conversion unit (48) performs so-called dq conversion based on the u-phase current ($i_u$) and the w-phase current ($i_w$) output by the phase conversion unit (47) and an electrical angle (motor phase) of a rotor (not illustrated) of the motor (30) to derive the d-axis current ($i_d$) and the q-axis current ($i_q$) of the motor (30). Alternatively, for example, a current sensor may be provided. The current sensor can directly detect the values of the u-phase current ($i_u$) and a v-phase current ($i_v$).

The dq-axis current control unit (49) derives a d-axis voltage command value ($v_d$*) and a q-axis voltage command value ($v_q$*) based on a d-axis current command value ($i_d$*), the q-axis current command value ($i_q$*), the d-axis current ($i_d$), and the q-axis current ($i_q$). Specifically, the dq-axis current control unit (49) derives the d-axis voltage command value ($v_d$*) and the q-axis voltage command value ($v_q$*) so as to reduce the deviation between the d-axis current command value ($i_d$*) and the d-axis current ($i_d$) and the deviation between the q-axis current command value ($i_q$*) and the q-axis current ($i_q$).

The PWM calculation unit (50) generates a control signal (G) for control to turn on or off the switching elements (Su, Sv, Sw, Sx, Sy, Sz) in the inverter circuit (13). Specifically, the PWM calculation unit (50) sets a duty ratio of the control signal (G) supplied to each of the switching elements (Su, Sv, Sw, Sx, Sy, Sz) based on the motor phase, the DC voltage ($v_{dc}$), the d-axis voltage command value ($v_d$*), and the q-axis voltage command value ($v_q$*). When the control signal (G) is output, each of the switching elements (Su, Sv, Sw, Sx, Sy, Sz) performs a switching operation (on or off operation) at the duty ratio set by the PWM calculation unit (50). The control signal (G) is periodically updated to control the switching operation in the inverter circuit (13).

<Operation of Electric Power Conversion Apparatus>

When the electric power conversion apparatus (10) starts to operate, the converter circuit (11) full-wave rectifies the power-source voltage ($v_{in}$) and outputs the rectified result to the DC link unit (12). The DC link unit (12) receives the output of the converter circuit (11) as the input and generates the DC voltage ($v_{dc}$) that pulsates at the frequency twice the frequency of the power-source voltage ($v_{in}$). As illustrated in Fig. 3, the DC voltage ($v_{dc}$) has a constant value larger than 0 in a predetermined period in the vicinity of the zero-cross (hereinafter, referred to as a zero-cross vicinity period (P0)). The zero-cross vicinity period (P0) is a period including the time point at which the power-source voltage ($v_{in}$) is zero, and is a period corresponding to a valley of the pulsating waveform of the DC voltage ($v_{dc}$).

In addition, in the electric power conversion apparatus (10), the dq-axis current command calculation unit (43) generates the power-source current command value ($|i_{in}$*|) that pulsates in accordance with the frequency (for example, 50 Hz) of the power-source voltage ($v_{in}$) based on the power-source phase ($\theta$in). The dq-axis current command calculation unit (43) generates the pulsation command value ($i_p$*) based on the generated power-source current command value ($|i_{in}$*|). In contrast, the PI control unit (45) calculates the q-axis current command compensation amount ($i_{comp}$*) so as to reduce the deviation between the command value ($V_{dc\_c}$) and the predicted value ($V_{dc\_p}$) of the DC voltage ($v_{dc}$). Thus, the q-axis current command value ($i_q$*) is calculated.

When the q-axis current command value ($i_q$*) is calculated as described above, the dq-axis current control unit (49) generates the d-axis voltage command value ($v_d$*) and the q-axis voltage command value ($v_q$*) based on the d-axis current command value ($i_d$*), the q-axis current command value ($i_q$*), and the like. Accordingly, the PWM calculation unit (50) generates the control signal (G), and the inverter circuit (13) performs the switching operation corresponding to the control signal (G). As a result, predetermined AC electric power is supplied from the inverter circuit (13) to the motor (30), and the motor (30) is driven.

As described above, in Embodiment 1, the control unit (40) controls the inverter circuit (13) so as to have the non-conduction period during which the current does not flow from the AC power source (20) to the converter circuit (11).

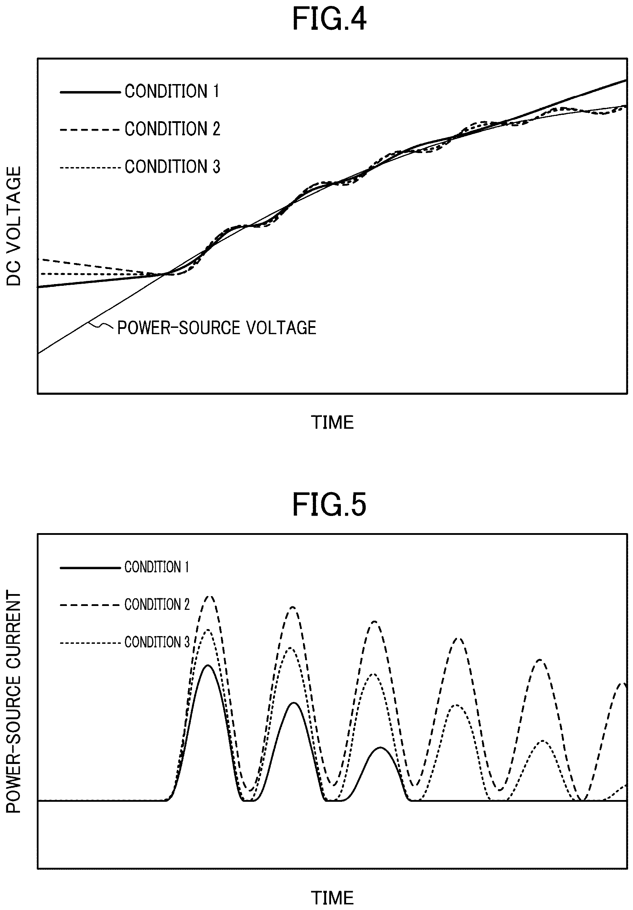

Here, Fig. 4 illustrates transitions of the power-source voltage ($v_{in}$) and the DC voltages (vdc) in the circuit of Fig. 1 under Condition 1 that a current flows from the inverter circuit (13) to the capacitor (C), Condition 2 that a current flows from the capacitor (C) to the inverter circuit (13), and Condition 3 that a current does not flow between the inverter circuit (13) and the capacitor (C). Fig. 5 illustrates waveforms of the power-source currents ($i_{in}$) under Condition 1 to Condition 3.

From Fig. 5, it can be seen that the harmonic component of the power-source current ($i_{in}$) due to the LC resonance of the circuit including the capacitor (C) and the reactor (L) can be suppressed most under Condition 1.

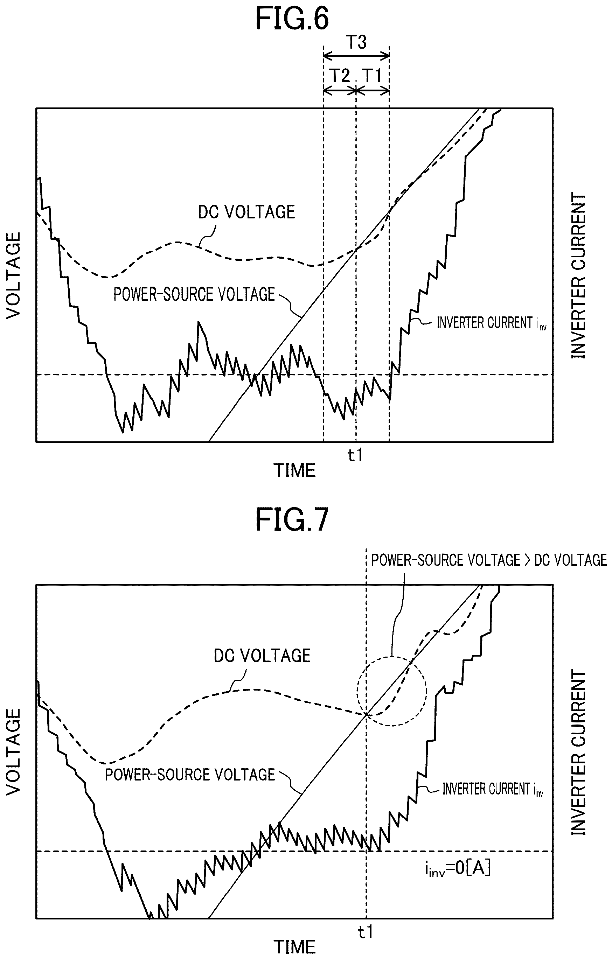

When the non-conduction period is provided as in Embodiment 1, the LC resonance may occur at a transition timing (t1) (see Fig. 6) for a transition from the non-conduction period to a conduction period during which the current flows from the AC power source (20) to the converter circuit (11). In Fig. 7, an inverter current ($i_{inv}$) flowing from the capacitor (C) to the inverter circuit (13) has a positive value before and after the transition timing (t1). Accordingly, the current flows to the motor (30) side immediately after the transition timing (t1), the DC voltage ($v_{dc}$) decreases, the energy of the reactor (L) becomes larger than the energy of the capacitor (C), and resonance is likely to occur. Thus, in Embodiment 1, the command value ($V_{dc\_c}$) of the DC voltage ($v_{dc}$) is set so that the integral value of the inverter current ($i_{inv}$) flowing from the capacitor (C) to the inverter circuit (13) is 0 or less in a period (T1) (see Fig. 6) of a half cycle of the LC resonance starting from the transition timing (t1) (see Fig. 6). The command value ($V_{dc\_c}$) of the DC voltage ($v_{dc}$) is set so that the DC voltage ($v_{dc}$) gradually increases along the absolute value of the power-source voltage ($v_{in}$). The command value ($V_{dc\_c}$) of the DC voltage ($v_{dc}$) is also set so that the inverter current ($i_{inv}$) is 0 or less at the transition timing (t1).

Further, in Embodiment 1, the command value ($V_{dc\_c}$) of the DC voltage ($v_{dc}$) is set so that the integral value of the inverter current ($i_{inv}$) is 0 or less also in a period (T2) (see Fig. 6) of a half cycle of the LC resonance immediately before the transition timing (t1) (see Fig. 6). For example, the integral value of the inverter current ($i_{inv}$) may be 0 or less only in the period (T1), and the integral value of the inverter current ($i_{inv}$) may exceed 0 in part or the entirety of the period (T2).

Thus, in Embodiment 1, as illustrated in Fig. 6, the integral value of the inverter current ($i_{inv}$) is 0 or less in the period (T1) of the half cycle of the LC resonance starting from the transition timing (t1) at which the power-source voltage ($v_{in}$) and the DC voltage ($v_{dc}$) are equal to each other. In addition, the integral value of the inverter current ($i_{inv}$) is 0 or less also in the period (T2) of the half cycle of the LC resonance immediately before the transition timing (t1). Accordingly, the harmonic of the power-source current ($i_{in}$) can be suppressed as compared with the case where the integral value exceeds 0. In addition, since the inverter current ($i_{inv}$) is 0 or less at the transition timing (t1), the harmonic of the power-source current ($i_{in}$) can be suppressed as compared with the case where the inverter current ($i_{inv}$) exceeds 0. Thus, the reactor (L) can also be downsized.

In addition, in Embodiment 1, the command value ($V_{dc\_c}$) of the DC voltage ($v_{dc}$) is further set so as to attenuate the amplitude of a current flowing through the reactor (L) by more than 80% in a resonance suppression period. Thus, the control unit (40) operates the inverter circuit (13) to attenuate the amplitude of the current flowing through the reactor (L) by more than 80% in the resonance suppression period of three cycles of the LC resonance starting from the transition timing (t1). That is, at the end of the resonance suppression period, the amplitude of the current flowing through the reactor (L) is less than 20% of the amplitude at the transition timing (t1). When $I_L$ denotes a current flowing through the reactor (L), A denotes an amplitude of the rise of the current, B denotes an attenuation coefficient, and $f_{LC}$ denotes a resonance frequency, the current $I_L$ is expressed by an expression as follows.

$$I_L = Ae^{-Bt}\sin(2\pi f_{LC}t)$$

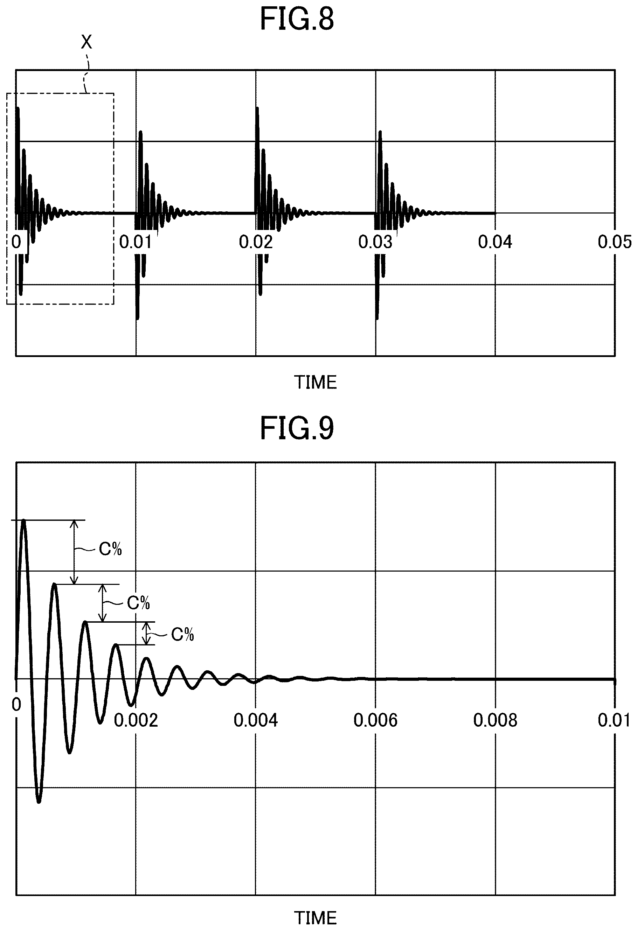

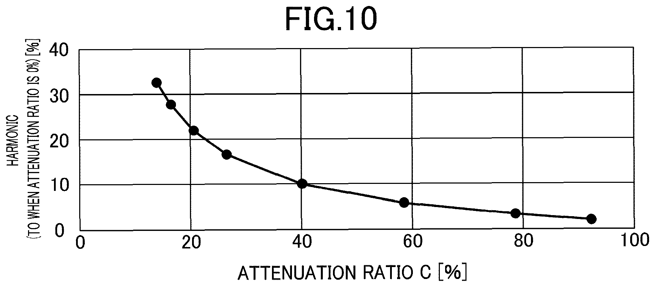

Fig. 8 illustrates the waveform of the current $I_L$ when the attenuation coefficient is 1000. As illustrated in Fig. 9, the current $I_L$ is attenuated by a predetermined attenuation ratio of C% in each resonance cycle. Fig. 10 illustrates the relationship between the attenuation ratio C when the resonance frequency is 1950 Hz and the ratio of a harmonic to a harmonic when the attenuation ratio C is 0 at the end of the resonance suppression period (the period of the three cycles of the LC resonance starting from the transition timing (t1)). By setting the attenuation ratio C to 40% or more, the harmonic can be reduced to 10% or less of the harmonic when the attenuation ratio C is 0. The change in the ratio of the harmonic with respect to the attenuation ratio C is large until the attenuation ratio C reaches 40%, and decreases when the attenuation ratio C is 40% or more. Thus, the attenuation ratio C is preferably set to 40% or more. In addition, in Fig. 9, when the attenuation ratio C for each resonance cycle is 40%, the amplitude of the current $I_L$ is reduced by about 80% at the end of the resonance suppression period as compared with the first half cycle from the transition timing (t1). Thus, by setting the attenuation ratio C to 40% or more, the amplitude of the current $I_L$ can be reduced by 80% or more during the resonance suppression period.

Thus, in Embodiment 1, since the amplitude of the current flowing through the reactor (L) is attenuated by more than 80% in the resonance suppression period, the harmonic of the power-source current ($i_{in}$) can be suppressed.

(Embodiment 2)

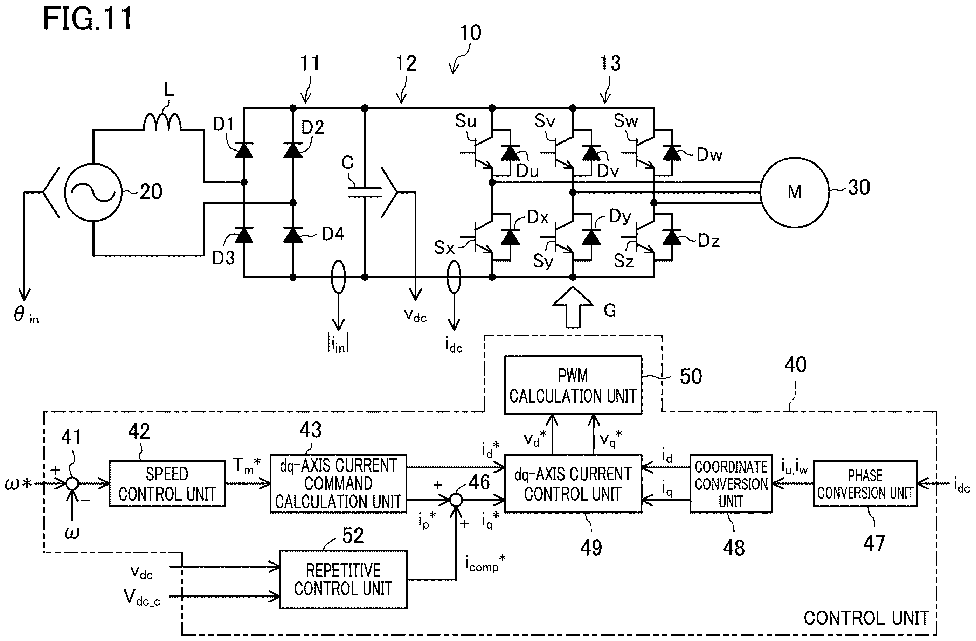

Fig. 11 illustrates a configuration of an electric power conversion apparatus (10) according to Embodiment 2 of the present disclosure. In Embodiment 2, the control unit (40) includes a repetitive control unit (52) instead of the PI control unit (45).

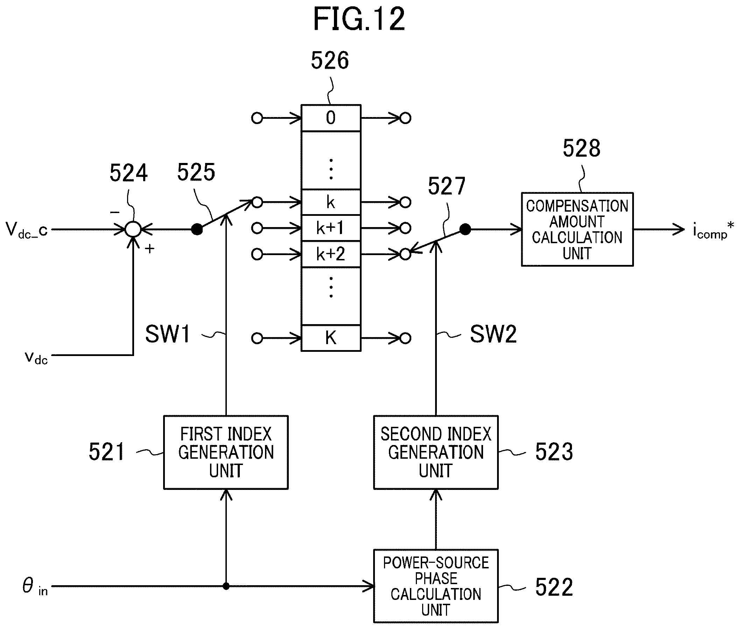

As illustrated in Fig. 12, the repetitive control unit (52) includes a first index generation unit (521), a power-source phase calculation unit (522), a second index generation unit (523), a third subtraction unit (524), a first switching unit (525), a deviation storage unit (526), a second switching unit (527), and a compensation amount calculation unit (528).

The first index generation unit (521) outputs a switching signal (SW1) for designating which one of K kinds of phase ranges the current power-source phase ($\theta$in) belongs to.

The power-source phase calculation unit (522) calculates the current power-source phase ($\theta$in).

Based on the current power-source phase ($\theta_{in}$) calculated by the power-source phase calculation unit (522), the second index generation unit (523) calculates the power-source phase ($\theta_{in}$) at the timing at which the compensation amount to be calculated this time affects the detected value of the DC voltage ($v_{dc}$). Specifically, the second index generation unit (523) calculates the power-source phase ($\theta_{in}$) that is 3/4 pulse width modulation cycles ahead of the current power-source phase ($\theta$in). Then, the second index generation unit (523) outputs a switching signal (SW2) for designating which one of the K kinds of phase ranges the calculated power-source phase ($\theta_{in}$) belongs to.

The third subtraction unit (524) subtracts the command value ($V_{dc\_c}$) of the DC voltage ($v_{dc}$) from the detected value of the DC voltage ($v_{dc}$) to calculate a deviation between the command value ($V_{dc\_c}$) of the DC voltage ($v_{dc}$) and the detected value of the DC voltage ($v_{dc}$).

The first switching unit (525) selects one of input terminals of the deviation storage unit (526) in accordance with the switching signal (SW1) output by the first index generation unit (521). Then, the first switching unit (525) connects the selected input terminal and the output of the third subtraction unit (524) to each other.

The deviation storage unit (526) divides the power-source phases ($\theta$in) of 0° to 180° into phase ranges of 0° or more and less than 180°/K, 180°/K or more and less than 360°/K, 360°/K or more and less than 540°/K, ... 180°*(K-1)/K or more and less than 180°, and indices 1 to K are sequentially assigned to the respective phase ranges. In addition, the deviation input from the first switching unit (525) is stored as a deviation of the phase range designated with the switching signal (SW1).

The second switching unit (527) outputs, to the compensation amount calculation unit (528), the deviation corresponding to the phase range designated with the switching signal (SW2) output by the second index generation unit (523) among the deviations stored in the deviation storage unit (526).

The compensation amount calculation unit (528) calculates and outputs the compensation amount (q-axis current command compensation amount ($i_{comp}$*)) so as to reduce the deviation output by the second switching unit (527). The compensation amount calculation unit (528) performs, for example, a PI (proportional, integral) operation, for example, based on the deviation output by the second switching unit (527) to obtain the q-axis current command compensation amount ($i_{comp}$*).

In Embodiment 2, as in Embodiment 1, the command value ($V_{dc\_c}$) of the DC voltage ($v_{dc}$) is set.

Since other components are the same as those of Embodiment 1, the same components are denoted by the same reference numerals, and the detailed description thereof will be omitted.


(Embodiment 3)

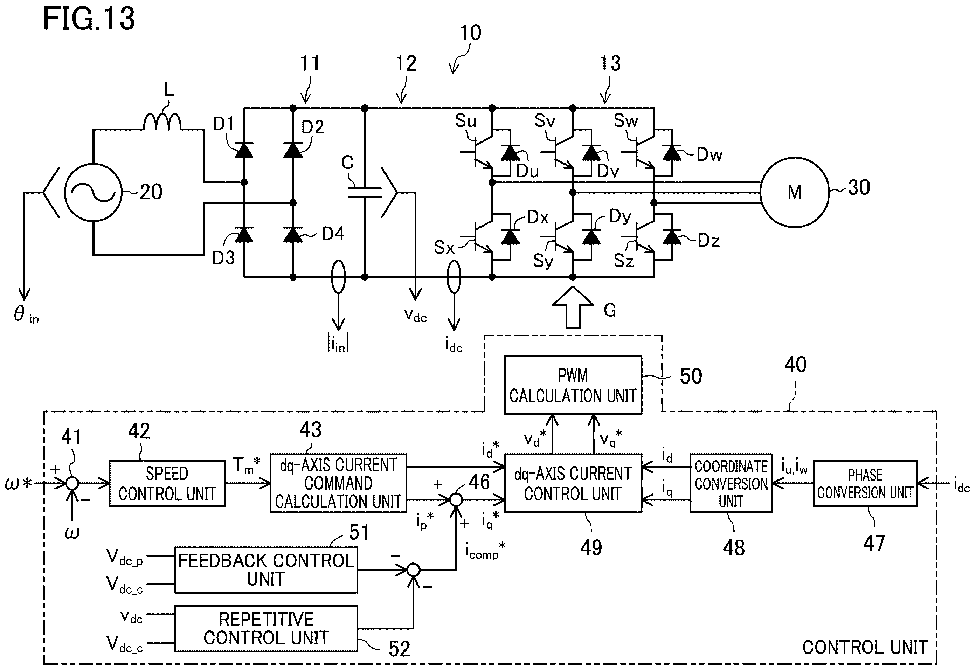

Fig. 13 illustrates a configuration of an electric power conversion apparatus (10) according to Embodiment 3 of the present disclosure. In Embodiment 3, the addition unit (46) adds the sum of a value obtained by multiplying a q-axis current command compensation amount output by a feedback (FB) control unit (51) by -1 and a value obtained by multiplying a q-axis current command compensation amount output by the repetitive control unit (52) by -1 to the pulsation command value ($i_p$*).

Since other components are the same as those of Embodiment 1, the same components are denoted by the same reference numerals, and the detailed description thereof will be omitted.

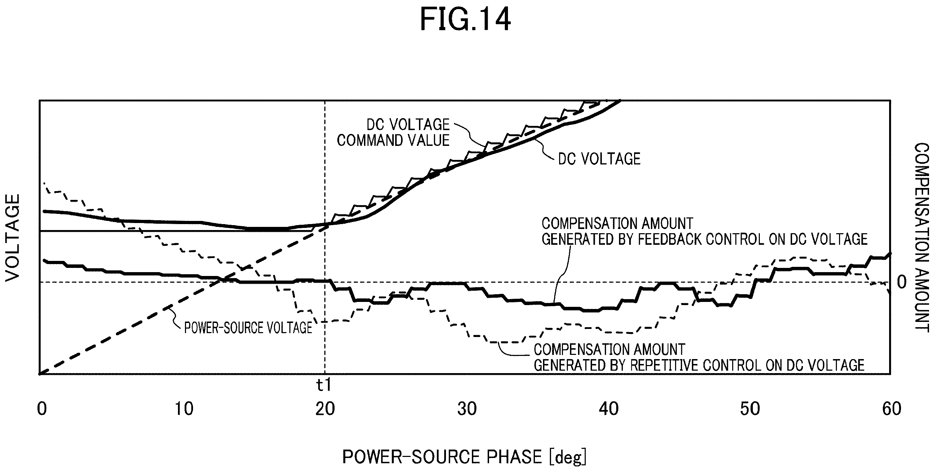

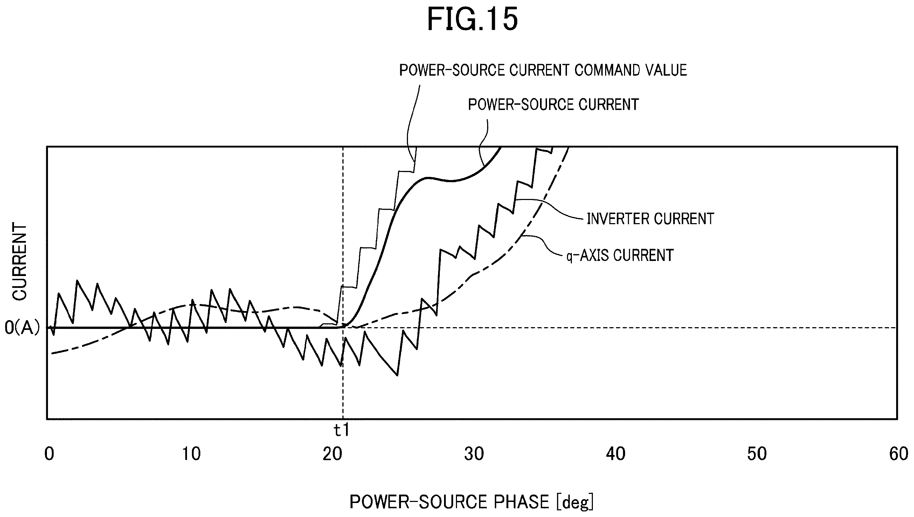

Fig. 14 illustrates waveforms of a DC voltage ($v_{dc}$), a DC voltage command value ($V_{dc\_c}$), a power-source voltage ($v_{in}$), a compensation amount generated by the feedback control on the DC voltage ($v_{dc}$), and a compensation amount generated by the repetitive control on the DC voltage ($v_{dc}$). Fig. 15 illustrates a power-source current ($i_{in}$), a power-source current command value ($|i_{in}$*|), an inverter current ($i_{inv}$), and a q-axis current ($i_q$).

As illustrated in Fig. 14, since a control delay does not occur in the repetitive control on the DC voltage ($v_{dc}$), the compensation amount generated by the repetitive control is less than 0 before the transition timing (t1) at which the DC voltage ($v_{dc}$) and the power-source voltage ($v_{in}$) are equal to each other. Thus, as illustrated in Fig. 15, the inverter current ($i_{inv}$) can be 0 or less at the transition timing (t1), and the current flowing to the motor (30) side at the rise of the power-source current ($i_{in}$) can be reduced.

(Embodiment 4)

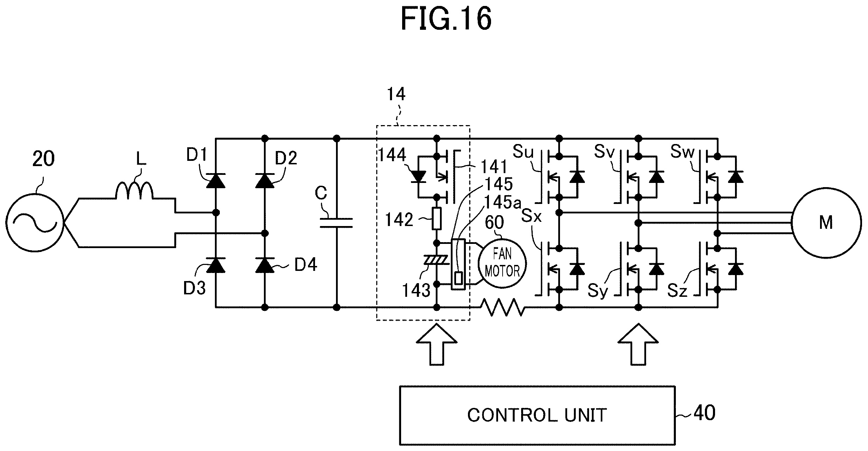

Fig. 16 illustrates a configuration of an electric power conversion apparatus (10) according to Embodiment 4 of the present disclosure. In Embodiment 4, a resonance suppression circuit (14) serving as a resonance suppression unit is connected in parallel to the capacitor (C). The resonance suppression circuit (14) includes a resonance-suppression-circuit switching element (141), a resistor (142), and a capacitive element (capacitor) (143) that are connected in series in this order from the input node side of the upper arm side of the inverter circuit (13). A diode (144) is connected in parallel to the resonance-suppression-circuit switching element (141) such that the cathode of the diode (144) is directed toward the capacitive element (143). The capacitive element (143) is connected to a fan-motor inverter circuit (145) as a second inverter circuit that converts the voltage of the capacitive element (143) into an alternating current and supplies the alternating current to a fan motor (60) as a second load different from the motor (30). The fan-motor inverter circuit (145) includes at least one switching element (145a).

The control unit (40) sets the transition timing (t1) to a timing at which the voltage of the capacitive element (143) is higher than the voltage of the capacitor (C).

The control unit (40) controls the resonance-suppression-circuit switching element (141) so that the integral value of a current flowing from the capacitor (C) to the resonance suppression circuit (14) is 0 or less in the period of the half cycle of the LC resonance starting from the transition timing (t1).

In addition, the control unit (40) controls the resonance-suppression-circuit switching element (141) so that the current flowing from the capacitor (C) to the resonance suppression circuit (14) is 0 or less at the transition timing (t1).

In addition, the control unit (40) operates the resonance-suppression-circuit switching element (141) to fattenuate the amplitude of the current flowing through the reactor (L) by more than 80% in the resonance suppression period of the three cycles of the LC resonance starting from the transition timing (t1).

Since other components are the same as those of Embodiment 1, the same components are denoted by the same reference numerals, and the detailed description thereof will be omitted.

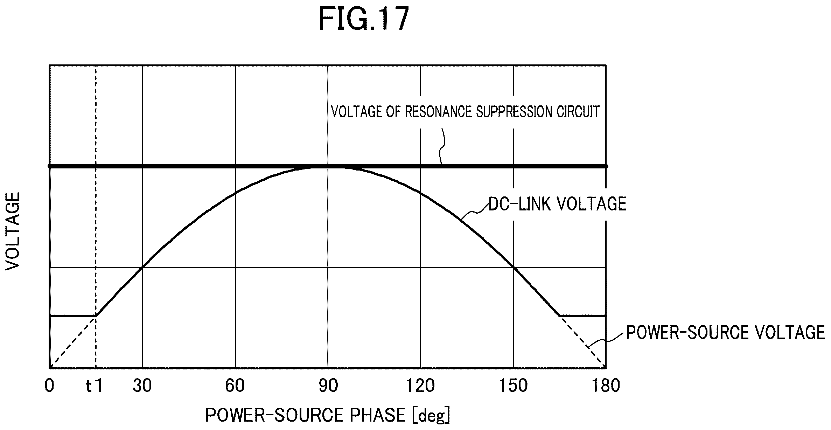

As illustrated in Fig. 17, the voltage of the resonance suppression circuit (14) is also maintained to be the voltage of the capacitor (C) or more. Thus, when the resonance-suppression-circuit switching element (141) is turned on, a current can flow from the capacitive element (143) to the capacitor (C). The diode (144) can restrict a decrease in the voltage of the capacitive element (143) due to a current flowing out from the capacitive element (143) in a state in which the resonance-suppression-circuit switching element (141) is turned off. In addition, the capacitive element (143) can be charged via the diode (144) in the state in which the resonance-suppression-circuit switching element (141) is turned off.

In addition, since the diode (144) is provided, the control unit (40) can adjust the voltage of the capacitive element (143) and the DC voltage ($v_{dc}$) (the voltage of the capacitor (C)) to be lowered by supplying electric power to the fan motor (60) under the control of the fan-motor inverter circuit (145) in the state in which the resonance-suppression-circuit switching element (141) is turned off. Thus, when the DC voltage ($v_{dc}$) is higher than the power-source voltage ($v_{in}$) due to the LC resonance during the period from the time point at which the half cycle of resonance elapses from the transition timing (t1) to the time point at which the one cycle of resonance elapses from the transition timing (t1), lowering the DC voltage ($v_{dc}$) can reduce the difference between the power-source voltage ($v_{in}$) and the DC voltage ($v_{dc}$) and reduce the resonance. That is, the control of the fan-motor inverter circuit (145) can lower the DC voltage ($v_{dc}$) and reduce the resonance. The control of the inverter circuit (13) can also lower the DC voltage ($v_{dc}$) and reduce the resonance.

(Embodiment 5)

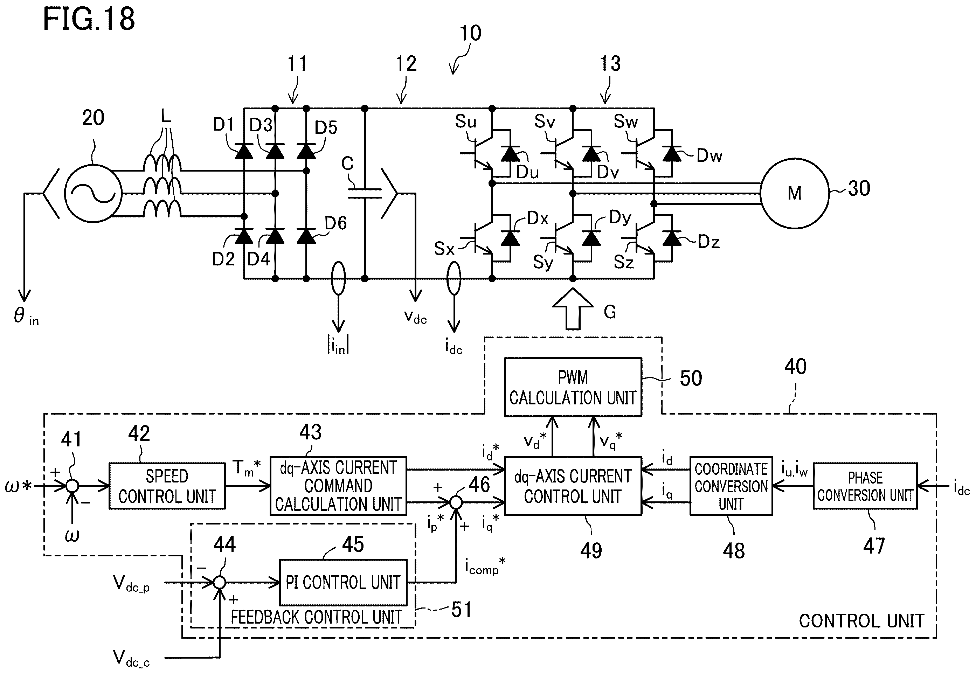

Fig. 18 illustrates a configuration of an electric power conversion apparatus (10) according to Embodiment 5 of the present disclosure. In Embodiment 5, the AC power source (20) is an AC power source of three phases.

When Pmax(W) denotes the maximum power consumption of the motor (30), $V_{in}$(V) denotes a voltage value of the AC power source (20), and C(F) denotes a capacitance of the capacitor (C), and when Pmax $\geq$ 2000 is established, Expression (9) below is established.

[Math. 9]

$$C \leq 350 \times 10^{-6} \times \frac{Pmax}{Vac^2} \quad \cdot \cdot \cdot \quad (9)$$

In addition, the transition timing (t1) is a timing for a transition from a non-conduction period during which a current of a predetermined phase among the three phases does not flow from the AC power source (20) to the converter circuit (11) to a conduction period during which the current of the predetermined phase flows from the AC power source (20) to the converter circuit (11).

Since other components are the same as those of Embodiment 1, the same components are denoted by the same reference numerals, and the detailed description thereof will be omitted.

For example, in Embodiments 2 to 4 described above, as in Embodiment 5, the AC power source (20) may be an AC power source of three phases.

While the first load is the motor (30) of the compressor in Embodiments 1 to 5 described above, the first load may be another load. While the second load is the fan motor (60) in Embodiment 4 described above, the second load may be another load as long as the load is different from the first load.

In addition, while the reactor (L) is connected between the AC power source (20) and the converter circuit (11) in Embodiments 1 to 5 described above, for example, the reactor (L) may be connected between the converter circuit (11) and the inverter circuit (13).

In addition, in Embodiments 1 to 5 described above, the control unit (40) operates at least one of the inverter circuit (13), the resonance-suppression-circuit switching element (141), and the fan-motor inverter circuit (145) to attenuate the amplitude of the current flowing through the reactor (L) by more than 80% in the resonance suppression period. For example, a physical quantity, which is other than the current flowing through the reactor (L) and which is correlated with a pulsation of magnetic energy of the reactor (L) due to the LC resonance, may be attenuated by more than 80%.

Although the embodiments have been described, it should be understood that the embodiments and the details thereof are changeable in various ways without departing from the idea and scope of the claims. The components of the above-described embodiments and modifications may be properly combined and exchanged unless the combination and exchange degrade the subject functions of the present disclosure.

Industrial Applicability

The present disclosure is useful as an electric power conversion apparatus that converts electric power output from an AC power source and supplies the converted electric power to a load.

Reference Signs List

10 electric power conversion apparatus
11 converter circuit (rectifier circuit)
13 inverter circuit (first inverter circuit, resonance suppression unit)
14 resonance suppression circuit (resonance suppression unit)
141 resonance-suppression-circuit switching element
143 capacitive element
144 diode
145 fan-motor inverter circuit (second inverter circuit)
145a switching element
20 AC power source
30 motor (first load)
40 control unit
60 fan motor (second load)
Su, Sv, Sw, Sx, Sy, Sz switching element
C capacitor (DC link capacitor)
L reactor
t1 transition timing
T1 period
$v_{dc}$ DC voltage

**Claims**

1. An electric power conversion apparatus including

   a rectifier circuit (11) configured to rectify an alternating current output from a single-phase AC power source (20),
   a first inverter circuit (13) including a plurality of switching elements (Su, Sv, Sw, Sx, Sy, Sz) and configured to convert a direct current output by the rectifier circuit (11) into an alternating current by a switching operation of the switching elements (Su, Sv, Sw, Sx, Sy, Sz) and supply the alternating current to a first load (30),

a DC link capacitor (C) connected between input nodes of the first inverter circuit (13) and having a capacitance value set so as to allow a fluctuation in an output voltage of the rectifier circuit (11) and suppress a ripple voltage caused by the switching operation,
a reactor (L) connected between the rectifier circuit (11) and the first inverter circuit (13) or between the AC power source (20) and the rectifier circuit (11), and
a control unit (40) configured to control the first inverter circuit (13) so as to have a non-conduction period during which a current does not flow from the AC power source (20) to the rectifier circuit (11), the electric power conversion apparatus comprising:

a resonance suppression unit (13, 14) connected in parallel to the DC link capacitor (C), including at least one switching element (Su, Sv, Sw, Sx, Sy, Sz, 141), and configured to suppress LC resonance of a circuit including the DC link capacitor (C) and the reactor (L),
wherein the control unit (40) is configured to control the resonance suppression unit (13, 14) so that an integral value of a current flowing from the DC link capacitor (C) to the resonance suppression unit (13, 14) is 0 or less in a period (T1) of a half cycle of the LC resonance starting from a transition timing (t1) for a transition from the non-conduction period to a conduction period during which the current flows from the AC power source (20) to the rectifier circuit (11).

2. The electric power conversion apparatus according to claim 1,
wherein the control unit (40) is configured to control the resonance suppression unit (13, 14) so that the current flowing from the DC link capacitor (C) to the resonance suppression unit (13, 14) is 0 or less at the transition timing (t1).

3. The electric power conversion apparatus according to claim 1 or 2,

wherein the resonance suppression unit (13, 14) is the first inverter circuit (13), and
wherein the first load (30) is a motor (30).

4. The electric power conversion apparatus according to claim 3,
wherein the motor (30) is a motor (30) of a compressor.

5. The electric power conversion apparatus according to claim 1 or 2, comprising:

a resonance suppression circuit (14) including a capacitive element (143) and a resonance-suppression-circuit switching element (141) connected in series to each other, the resonance suppression circuit (14) being connected in parallel to the DC link capacitor (C),
wherein the resonance suppression unit (13, 14) is the resonance suppression circuit (14), and
wherein the control unit (40) is configured to set the transition timing (t1) to a timing at which a voltage of the capacitive element (143) is higher than a voltage of the DC link capacitor (C).

6. The electric power conversion apparatus according to claim 5,
wherein the resonance suppression circuit (14) further includes a diode (144) connected in parallel to the resonance-suppression-circuit switching element (141) such that a cathode of the diode (144) is directed toward the capacitive element (143).

7. The electric power conversion apparatus according to claim 5 or 6,
wherein a second inverter circuit (145) configured to convert the voltage of the capacitive element (143) into an alternating current and supply the alternating current to a second load (60) different from the first load (30) is connected to the capacitive element (143).

8. The electric power conversion apparatus according to any one of claims 1 to 4,
wherein the control unit (40) is configured to control the resonance suppression unit (13, 14) based on a detected value of a voltage ($v_{dc}$) of the DC link capacitor (C).

9. An electric power conversion apparatus including

a rectifier circuit (11) configured to rectify an alternating current output from a single-phase AC power source,
an inverter circuit (13) including a plurality of switching elements (Su, Sv, Sw, Sx, Sy, Sz) and configured to convert a direct current output by the rectifier circuit (11) into an alternating current by a switching operation of the switching elements (Su, Sv, Sw, Sx, Sy, Sz) and supply the alternating current to a load (30),

a DC link capacitor (C) connected between input nodes of the inverter circuit (13) and having a capacitance value set so as to allow a fluctuation in an output voltage of the rectifier circuit (11) and suppress a ripple voltage caused by the switching operation,

a reactor (L) connected between the rectifier circuit (11) and the inverter circuit (13) or between the AC power source (20) and the rectifier circuit (11), and

a control unit (40) configured to control the inverter circuit (13) so as to have a non-conduction period during which a current does not flow from the AC power source (20) to the rectifier circuit (11), the electric power conversion apparatus comprising:

a resonance suppression unit (13, 14) connected in parallel to the DC link capacitor (C), including at least one switching element (Su, Sv, Sw, Sx, Sy, Sz, 141, 145a), and configured to suppress LC resonance of a circuit including the DC link capacitor (C) and the reactor (L),

wherein the control unit (40) is configured to operate the resonance suppression unit (13, 14) to attenuate a physical quantity correlated with a pulsation of magnetic energy of the reactor (L) due to the LC resonance by more than 80% in a resonance suppression period of three cycles of the LC resonance starting from a transition timing (t1) for a transition from the non-conduction period to a conduction period during which the current flows from the AC power source (20) to the rectifier circuit (11).

10. An electric power conversion apparatus including

a rectifier circuit (11) configured to rectify an alternating current output from an AC power source (20) of three phases,

an inverter circuit (13) including a plurality of switching elements (Su, Sv, Sw, Sx, Sy, Sz) and configured to convert a direct current output by the rectifier circuit (11) into an alternating current by a switching operation of the switching elements (Su, Sv, Sw, Sx, Sy, Sz) and supply the alternating current to a load,

a DC link capacitor (C) connected between input nodes of the inverter circuit (13) and having a capacitance value set so as to allow a fluctuation in an output voltage of the rectifier circuit (11) and suppress a ripple voltage caused by the switching operation,

a reactor (L) connected between the rectifier circuit (11) and the inverter circuit (13) or between the AC power source (20) and the rectifier circuit (11), and

a control unit (40) configured to control the inverter circuit (13) so as to have a non-conduction period during which a current of a predetermined phase among the three phases does not flow from the AC power source (20) to the rectifier circuit (11), the electric power conversion apparatus comprising:

a resonance suppression unit (13, 14) connected in parallel to the DC link capacitor (C), including at least one switching element (Su, Sv, Sw, Sx, Sy, Sz, 141, 145a), and configured to suppress LC resonance of a circuit including the DC link capacitor (C) and the reactor (L),

wherein the control unit (40) is configured to operate the resonance suppression unit (13, 14) to attenuate a physical quantity correlated with a pulsation of magnetic energy of the reactor (L) due to the LC resonance by more than 80% in a resonance suppression period of three cycles of the LC resonance starting from a transition timing (t1) for a transition from the non-conduction period to a conduction period during which the current of the predetermined phase flows from the AC power source (20) to the rectifier circuit (11).

11. The electric power conversion apparatus according to claim 9 or 10, wherein the physical quantity is an amplitude of a current flowing through the reactor (L) during the resonance suppression period.

12. An electric power conversion apparatus including

a rectifier circuit (11) configured to rectify an alternating current output from an AC power source (20) of three phases,

an inverter circuit (13) including a plurality of switching elements (Su, Sv, Sw, Sx, Sy, Sz) and configured to convert a direct current output by the rectifier circuit (11) into an alternating current by a switching operation of the switching elements (Su, Sv, Sw, Sx, Sy, Sz) and supply the alternating current to a load (30),

a DC link capacitor (C) connected between input nodes of the inverter circuit (13) and having a capacitance value set so as to allow a fluctuation in an output voltage of the rectifier circuit (11) and suppress a ripple voltage caused by the switching operation,

a reactor (L) connected between the rectifier circuit (11) and the inverter circuit (13) or between the AC power source (20) and the rectifier circuit (11), and

a control unit (40) configured to control the inverter circuit (13) so as to have a non-conduction period during which a current of a predetermined phase among the three phases does not flow from the AC power source (20) to the rectifier circuit (11), the electric power conversion apparatus comprising:

a resonance suppression unit (13, 14) connected in parallel to the DC link capacitor (C), including at least one switching element (Su, Sv, Sw, Sx, Sy, Sz, 141), and configured to suppress LC resonance of a circuit including the DC link capacitor (C) and the reactor (L),

wherein the control unit (40) is configured to control the resonance suppression unit (13, 14) so that an integral value of a current flowing from the DC link capacitor (C) to the resonance suppression unit (13, 14) is 0 or less in a period of a half cycle of the LC resonance starting from a transition timing (t1) for a transition from the non-conduction period to a conduction period during which the current of the predetermined phase flows from the AC power source (20) to the rectifier circuit (11).

FIG.1

# FIG.2

NON-CONDUCTION PERIOD    NON-CONDUCTION PERIOD

POWER-SOURCE CURRENT

0    60    120    180

POWER-SOURCE PHASE [deg]

# FIG.3

VOLTAGE

DC VOLTAGE

POWER-SOURCE VOLTAGE

0    60    120    180

P0    P0

POWER-SOURCE PHASE [deg]

# FIG.4

# FIG.5

# FIG.6

# FIG.7

## FIG.8

TIME

## FIG.9

TIME

# FIG.10

# FIG.11

EP 4 761 091 A1

# FIG.12

EP 4 761 091 A1

# FIG.13

EP 4 761 091 A1

# FIG.14

EP 4 761 091 A1

# FIG.15

POWER-SOURCE CURRENT COMMAND VALUE

POWER-SOURCE CURRENT

INVERTER CURRENT

q-AXIS CURRENT

CURRENT

0(A)

t1

0          10          20          30          40          50          60

POWER-SOURCE PHASE [deg]

EP 4 761 091 A1

# FIG.16

EP 4 761 091 A1

# FIG.17

EP 4 761 091 A1

FIG.18

## INTERNATIONAL SEARCH REPORT

International application No.

**PCT/JP2024/031721**

### A. CLASSIFICATION OF SUBJECT MATTER

***H02M 7/48***(2007.01)i; ***H02P 27/08***(2006.01)i
FI: H02M7/48 E; H02P27/08

According to International Patent Classification (IPC) or to both national classification and IPC

### B. FIELDS SEARCHED

Minimum documentation searched (classification system followed by classification symbols)

H02M7/48; H02P27/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-68731 A (DAIKIN INDUSTRIES, LTD.) 25 April 2019 (2019-04-25) entire text, all drawings | 1-12 |
| A | JP 2015-195704 A (DAIKIN INDUSTRIES, LTD.) 05 November 2015 (2015-11-05) entire text, all drawings | 1-12 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 October 2024** | **12 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
**Information on patent family members**

International application No.

**PCT/JP2024/031721**

| Patent document cited in search report | | | Publication date (day/month/year) | Patent family member(s) | | | Publication date (day/month/year) |
|---|---|---|---|---|---|---|---|
| JP | 2019-68731 | A | 25 April 2019 | US | 2020/0220481 | A1 | |
| | | | | entire text, all drawings | | | |
| | | | | WO | 2019/065859 | A1 | |
| | | | | EP | 3664275 | A1 | |
| | | | | CN | 111149287 | A | |
| | | | | BR | 112020005475 | A | |
| JP | 2015-195704 | A | 05 November 2015 | (Family: none) | | | |

Form PCT/ISA/210 (patent family annex) (July 2022)

**EP 4 761 091 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6566105 B